# DEMANDE DE BREVET EUROPEEN

(11) **EP 0 627 747 A1**
(43) Date de publication de la demande: **07.12.1994**
(21) Numéro de dépôt: 94401204.6
(22) Date de dépôt: 01.06.1994
(51) Int. Cl.: H01B 1/12, C08G 61/12

(54) **Polymère conducteur dopé par un sel de cyclodextrine sulfonée et dispositif pour capter et/ou délivrer une substance active, comportant ce polymère**

(30) Priorité: 03.06.1993 FR 9306655
(71) Demandeur: COMMISSARIAT A L'ENERGIE ATOMIQUE, F-75015 Paris (FR)
(72) Inventeur: Vieil, Eric, F-38240 Meylan (FR); Bidan, Gérard, F-38100 Grenoble (FR); Gadelle, Andrée, F-38330 Montbonnot (FR); Mendes Viegas, Maria-Fatima, F-69009 Lyon (FR)
(74) Mandataire: Des Termes, Monique

(57) **Abrégé**

Polymère conducteur dopé par un sel de cyclodextrine sulfonée et dispositif pour capter et/ou délivrer une substance active, comportant ce polymère.

Le dopant utilisé présente la formule (I) suivante : 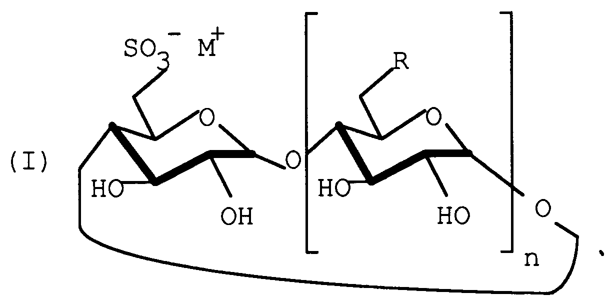
dans laquelle n est un entier allant de 2 à 50, M⁺ est Na⁺, Li⁺, K⁺, Mg⁺ _{1/2} ou NH₄⁺ et R représente -SO₃⁻M⁺ ou -OH, R pouvant être différent d'un cycle à l'autre. Le polymère conducteur dopé peut être utilisé comme matière active d'électrode dans un dispositif électrochimique.

## Description

La présente invention a pour objet de nouveaux polymères conducteurs électroniques dopés par un sel de cyclodextrine sulfonée, utilisables dans un grand nombre de domaines compte tenu de leurs propriétés conductrices. Ainsi, ces polymères peuvent constituer une matière active d'électrode dans un dispositif électrochimique. Plus spécialement, ces dispositifs électrochimiques sont destinés à capter et/ou relarguer une substance active.

Ainsi, les polymères de l'invention peuvent être utilisés dans les domaines pharmaceutique, vétérinaire, chimique et nucléaire.

Comme polymères organiques conducteurs de l'électricité connus, on peut citer les polyacétylènes, les polypyrroles, les polyanilines, et les polythiophènes.

Ces polymères conducteurs se préparent généralement par oxydation chimique ou électrochimique du monomère correspondant dissous dans un solvant approprié contenant un anion dopant simple ou complexe. Ces anions sont en particulier les ions SO₄²⁻, F⁻, Cl⁻, BF₄⁻, PF₆⁻, ClO₄⁻, Br⁻ comme décrits dans le document (1) FR-A-2 622 601.

Par ailleurs, il est connu d'utiliser des cyclodextrines pour former des composés d'inclusion avec de nombreuses substances organiques et notamment des produits liquides organiques de faible solubilité dans l'eau. A ce sujet, on peut se référer au document (2) US-A-3 426 011 ; au document (3) "Synthese und charakterisierung von Per(3,6-anhydro)cyclodextrinen" de P.R. Ashton et al., Angew. Chem. 103, n°1 (1991), p.96-97 ; au document (4) "Sulfation and hemolytic activity of cyclodextrin" de E.J. Macarak, Biochemical pharmacology, vol.42, N°7, p.1502-1503 (1991).

En outre, il est connu du document (5) US-A-4 755 326 l'utilisation de cyclodextrine dans un polymère conducteur électronique dopé par un ion d'un métal alcalin, en vue d'augmenter la conductivité électrique de polymères conducteurs tels que les polyacétylènes et les polypyrrones.

On rappelle que les cyclodextrines sont des oligosaccharides cycliques du D-glucose comportant le plus communément de six à huit unités D-glucopyranosyle liées par des enchaînements α-(1→4), ce qui leur confère une morphologie de type torique. Du fait de cet arrangement moléculaire et des structures électroniques afférentes, un caractère hydrophobe est associé à la cavité interne du cycle alors que la surface externe de la molécule est hydrophile.

On sait par ailleurs, que la solubilité des cyclodextrines dans l'eau et par voie de conséquence celle de leurs produits d'inclusion sont notablement augmentées lorsque la molécule est substituée par des groupements hydrophiles. C'est en particulier le cas des cyclodextrines comportant des groupements polaires chargés (aminés ou sulfatés).

En outre, des dérivés sulfonés de monosaccharides linéaires sont connus depuis longtemps, notamment du document (6) Carbohydrate Research, 22 (1972), p. 23-35 de J. Lehmann et W. Weckerle, "Zuckersulfonsäuren" ; du document (7) de M. Myano et A. Benson, J. Am. Chem. Soc., 84, 59 (1972), p. 57-62, "The plant sulfolipid. VI. Configuration of the glycerol moiety" ; du document (8) R. Whistler et D. Medcalf, Archives of Biochemistry and Biophysics 105, 1964, p. 1-6, "Preparation of 6-déoxyamilose-6-sulfonic acid".

L'invention a pour objet de nouveaux polymères conducteurs électroniques dopés par un dopant conférant une conductivité élevée à ces polymères ainsi que des propriétés de capture de substance active, permettant leur utilisation dans des dispositif de capteur et/ou de relargage de substances actives et notamment de médicaments, de façon électrochimique.

Selon une caractéristique essentielle de l'invention, les nouveaux polymères conducteurs électroniques sont dopés par une cyclodextrine comportant au moins un groupement sulfonate.

Le dopant de l'invention peut comporter un ou plusieurs groupements sulfonates agencés de façon symétrique ou non sur l'ensemble de l'oligosaccharide en fonction de l'application spécifique envisagée.

De plus, les polymères de l'invention présentent une grande stabilité et peuvent être orientés dans un champ électrique.

De façon avantageuse, le dopant des polymères conducteurs présente la formule (I) : 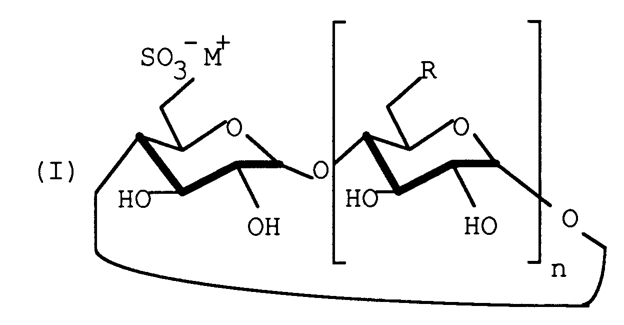
dans laquelle n est un entier allant de 2 à 50, M⁺ est un ion choisi parmi Na⁺, Li⁺, K⁺, NH₄⁺ et Mg⁺ _{1/2}, et R représente -SO₃⁻M⁺ ou -OH, R pouvant être différent d'un cycle à l'autre.

En particulier, n est choisi de 2 à 10 ; de préférence, il est égal à 5, 6 ou 7.

Ces cyclodextrines sulfonées peuvent être réalisées de façon très simple contrairement à certaines cyclodextrines de l'art antérieur (voir notamment le document (2)), en faisant réagir du sulfite de sodium, de lithium (Li₂SO₃, H₂O), de potassium (K₂SO₃, 2H₂O), de magnésium (MgSO₃, 6H₂O) ou d'ammonium ((NH₄)₂SO₃ou NH₄HSO₃) sur un halogénure d'un cyclomalto-oligosaccharide correspondant, en présence d'un agent de transfert de phase, cet halogénure comportant au moins un atome d'halogène en position 6 d'un cycle glucosique. On obtient ainsi le sel correspondant de cyclodextrine.

Dans ce procédé, on utilise les propriétés de la micellisation directe.

Les 6-halodérivés sont obtenus selon les procédés connus. En outre, la réaction d'échange d'un halogénure pour un sulfonate est connue depuis longtemps en chimie organique.

L'halogénure peut être un iodure, un bromure ou un chlorure. Il peut être monohalogéné, partiellement halogéné ou perhalogéné. La place des halogènes dans le cyclomalto-oligosaccharide de départ fixe la position des groupements sulfonate.

De façon avantageuse, la réaction est effectuée en milieu aqueux, l'agent de transfert de phase assurant la mise en solution de l'halogénure du cyclomalto-oligosaccharide normalement insoluble dans l'eau.

On rappelle qu'un agent de transfert, appelé aussi agent tensioactif, est un composé qui possède une tête polaire et une chaîne hydrophobe suffisamment longue entraînant des tendances respectivement hydrophile et lipophile fortement marquées. Ainsi, la dissolution d'une faible quantité de tensioactif dans un solvant se manifeste par une forte diminution de la tension superficielle. Ainsi, les solutions de tensioactif sont capables d'incorporer des quantités importantes de composés normalement insolubles dans le milieu considéré.

Afin de favoriser l'approche de l'anion sulfite solubilisé dans l'eau vers les halogéno-sulfodextrines, on utilise de préférence un tensioactif à tête polaire chargée positivement par un groupement ammonium quaternaire ; la partie hydrophobe quant à elle, comporte des groupements alkyle à longue chaîne ayant de 4 à 12 atomes de carbone.

Le contre-ion du tensioactif peut être choisi parmi l'anion sulfate, sulfite, iodure, chlorure, bromure, acétate.

On peut aussi obtenir les sels de Li, K, Mg et ammonium de la cyclodextrine en partant du sel de sodium, c'est-à-dire d'une solution sodique de sulfonate de cyclodextrine par échange sur une colonne échangeuse d'ions afin de remplacer le cation Na⁺ par le cation voulu.

Dans le cas du cation ammonium, on peut opérer de la façon suivante :

On échange avec une solution d'ammoniaque sous forme NH₄⁺ une colonne de résine acide, par exemple une résine Amberlite 77H⁺. On dépose ensuite sur la colonne qui contient 50 fois l'équivalent de sodium à échanger, la solution de sulfonate de sodium, puis on élue la colonne par de l'eau. L'éluat obtenu est le sulfonate d'ammonium de la cyclodextrine.

On peut opérer de la même façon avec d'autres cations.

Les polymères devant être dopés, utilisables dans l'invention, peuvent être des copolymères ou des homopolymères susceptibles d'être élaborés en milieu liquide et notamment en milieu aqueux. Ainsi, les polymères de l'invention peuvent être des polypyrroles, des polyanilines, des polythiophènes qui peuvent être fabriqués par oxydation chimique ou électrochimique des monomères correspondants en milieu solvant.

Par "polypyrrole", "polyaniline", et "polythiophène", on désigne des homopolymères et des copolymères respectivement de pyrrole et/ou de ses dérivés ; d'aniline et/ou de ses dérivés tels que la para(aminodiphénylamine), les toluidines, les aminophénols, les carboxyanilines ; de thiophène et/ou de ses dérivés tels que le bitiophène et les alkyle-3-thiophènes ayant de 1 à 12 atomes de carbone.

Du fait des groupements sulfonates du dopant électronique, les cyclodextrines de l'invention présentent une solubilité élevée dans l'eau, ce qui permet l'utilisation de ce solvant pour la fabrication des polymères de l'invention. Il est toutefois possible d'utiliser d'autres solvants tels que des solutions acides par exemple d'acide sulfurique ou d'acide perchlorique ou encore des solvants organiques tels que l'acétonitrile, le dichlorométhane.

Du fait de la cavité complexante des cyclodextrines de l'invention, les polymères dopés de l'invention peuvent être utilisés pour capter une substance active. Aussi, l'invention a encore pour objet un dispositif pour capter une substance active, comportant un polymère conducteur tel que défini précédemment, constituant une matière active d'électrode et des moyens pour commander la capture de cette substance par le polymère.

En outre, grâce aux propriétés électroniques du polymère conducteur (c'est-à-dire des polythiophènes, polypyrroles, polyanilines, etc.) les polymères dopés de l'invention peuvent être utilisés pour relarguer la substance active captée précédemment. Aussi, l'invention a encore pour objet un dispositif pour délivrer une substance active, comportant un polymère conducteur dopé tel que décrit précédemment, constituant une matière active d'électrode et renfermant ladite substance active, et des moyens pour commander la délivrance de cette substance.

Selon l'invention, le dispositif de capture et celui de délivrance d'une substance active peuvent consister en un même dispositif ou être différents.

Les dispositifs électrochimiques de capture et de délivrance de substance active, utilisables dans l'invention sont ceux classiquement utilisés dans le domaine médical dans lesquels la matière active positive d'électrode existante est remplacée par un film de polymère selon l'invention. A titre d'exemple, ces dispositifs peuvent être agencés comme décrit dans les documents (9) US-A-5 002 067 ; (10) EP-A-060 451 et (11) FR-A-2 586 813.

Les substances actives pouvant être captées et/ou relarguées avec le dispositif de l'invention sont en particulier des neuroleptiques utilisés pour le traitement des épilepsies, en gériatrie et contre les tumeurs, des diurétiques, des antihypertenseurs, des antidépresseurs.

D'autres caractéristiques et avantages de l'invention ressortirons mieux de la description qui suit, donnée à titre illustratif et non limitatif en référence aux figures annexées, dans lesquelles :

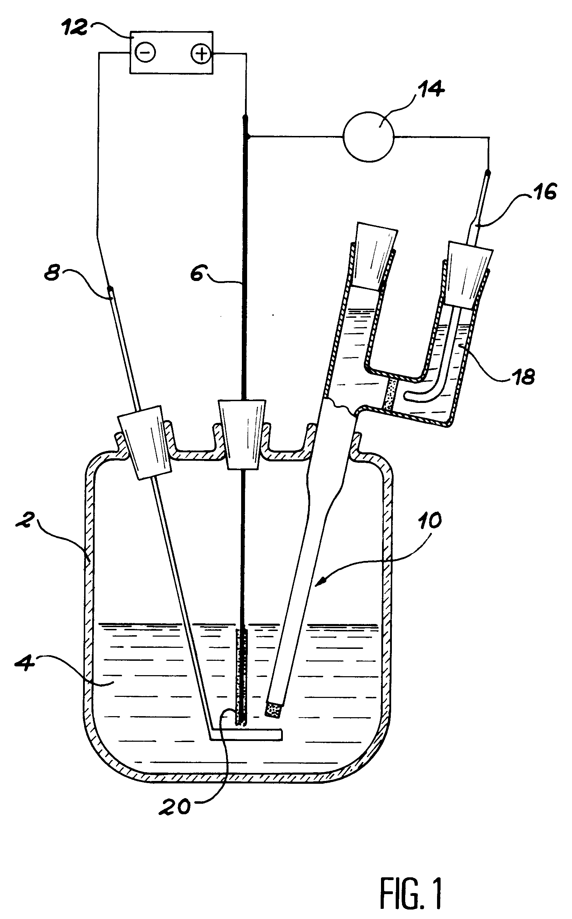

- la figure 1 représente schématiquement un dispositif permettant la fabrication d'un polymère conducteur conforme à l'invention ainsi que sa caractérisation ;

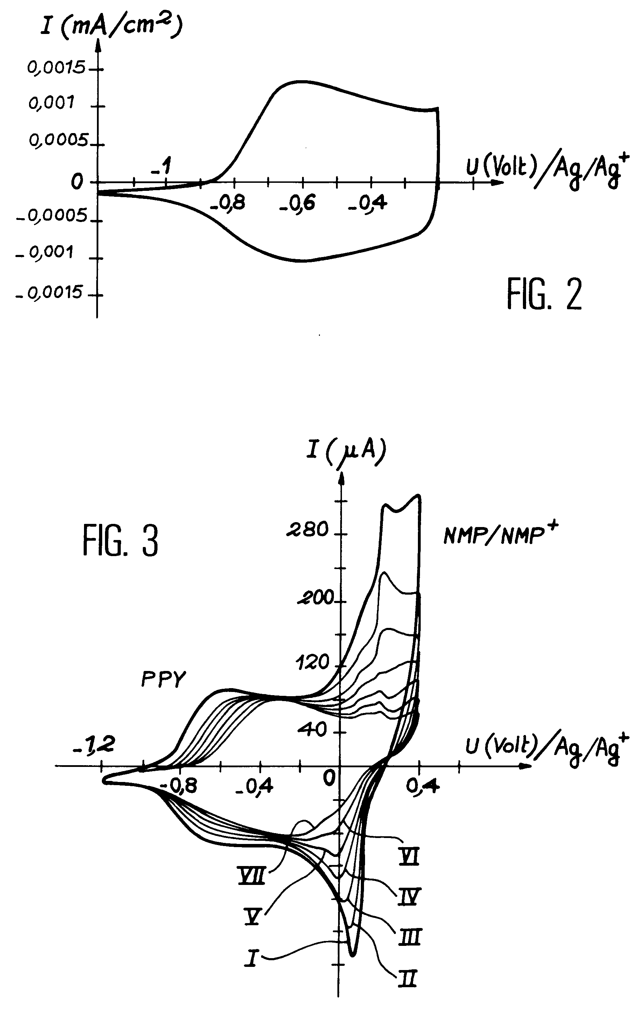

- la figure 2 est une courbe volt-ampérométrique cyclique, donnant les variations de la densité de courant J en mA/cm^{2,} d'un film selon l'invention de polypyrrole dopé par une β-cyclodextrine sulfonée, en présence d'une solution aqueuse de perchlorate de lithium, en fonction de la tension U en volts appliquée sur ce film et mesurée par rapport à une électrode de référence à l'argent ;
- la figure 3 donne l'évolution du comportement REDOX, au cours d'un cyclage d'un film de polypyrrole dopé par une β-cyclodextrine sulfonée dans une solution aqueuse de perchlorate de lithium, après capture de N-méthylphénothiazine (NMP), les courbes I à VII donnent pour sept cycles les variations du courant I en µA en fonction de la tension U en volts appliquée sur le film de polypyrrole et mesurée par rapport à une électrode à l'argent.

A titre d'exemple, on décrit ci-après la fabrication d'un film de polypyrrole dopé par le sel de sodium de l'heptakis (6-désoxy-6-sulfonyl)cyclomalto-heptaose, par oxydation électrochimique de pyrrole en présence de ce sel.

A cet effet, on introduit dans un récipient étanche isolant 2 une solution aqueuse 4 bidistillée de ce sel de cyclodextrine, à raison de 0,01 mol/dm^{3,} et de pyrrole, à raison de 0,1 mol/dm³. La dissolution du monomère et celle de la cyclodextrine étant achevées, on effectue un dégazage avec de l'azote pendant 10 minutes.

On introduit alors dans l'électrolyte 4 une électrode de travail 6 en platine jouant le rôle d'anode, une électrode auxiliaire 8 jouant le rôle de cathode ainsi qu'une électrode de référence 10 à l'argent. Les électrodes 6 et 8 sont connectées à l'extérieur du récipient 2 respectivement au pôle plus et au pôle moins d'une source d'alimentation électrique 12.

Afin de mesurer la différence de potentiel entre l'électrode de référence 10 et l'électrode de travail 6, un voltmètre 14 est branché entre ces électrodes 6 et 10. Le courant ou densité de courant circulant entre les électrodes 6 et 8 est mesuré à l'aide d'un ampèremètre branché en série (non représenté) ou lu directement sur la source d'alimentation 12.

L'électrode de référence 10 comporte de façon connue un fil d'argent 16 plongeant dans une solution 18 de LiClO₄ et d'AgNO₃ avec une concentration en ions Ag⁺ de 10⁻²M.

A l'aide de la source d'alimentation 12, on applique un potentiel constant de 0,4V par rapport à l'électrode de référence 10. La charge de synthèse maximale est de 0,7C/cm². Au-dessus de cette charge maximale, le film 20 de polypyrrole dopé obtenu n'est plus adhérent à la surface de l'électrode 6.

L'électrode 6 recouverte du film dopé est alors rincée avec la solution électrolytique utilisée soit pour la caractérisation électrochimique du film, soit pour la capture électrochimique d'une substance active.

Cette solution électrolytique est en particulier du perchlorate de lithium dissous dans de l'eau à raison de 0,5 mol/dm³.

La caractérisation du film par volt-ampérométrie cyclique est réalisée à l'aide d'un dispositif identique à celui de la figure 1 dans lequel la solution de sel de cyclodextrine sulfonée et de pyrrole est remplacée par la solution de perchlorate de lithium.

Après dissolution du perchlorate de lithium dans l'eau, la solution obtenue est dégazée à l'azote pendant 10 minutes.

En effectuant un balayage en potentiel entre -1,2volts et -0,2volts à une vitesse de 50mV/s, on a obtenu, pour le polypyrrole dopé fabriqué comme ci-dessus, la courbe représentée sur la figure 2.

Cette courbe indique clairement que la β-cyclodextrine sulfonée confère au film de polypyrrole des propriétés conductrices. Le film de polypyrrole avait une épaisseur d'un dixième de mm correspondant à une charge de synthèse de 0,7 C/cm².

L'électrode 6, recouverte du film de polypyrrole dopé 20, après sa caractérisation, peut alors être utilisé pour la capture d'une molécule neutre, insoluble dans l'eau, la N-méthyl phénothiozine (NMP) de formule (II) :

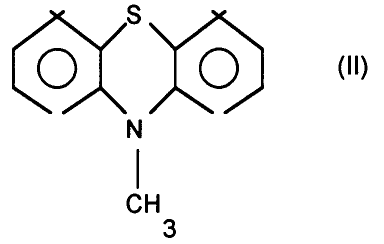

Cette espèce appartient à une famille de molécules, les phénothiazines qui ont d'importantes applications dans le domaine de la pharmacologie.

A cet effet, l'électrode 6 pourvue du film de polypyrrole 20 est alors réduite dans la solution de caractérisation de perchlorate de lithium, en appliquant une tension de -1,2 volt à l'aide de la source 12, mesurée par rapport à la l'électrode de référence. Cette tension est maintenue jusqu'à ce que l'on ne mesure plus aucun courant de réduction du film de polypyrrole dopé.

L'électrode 6 avec le film 20 à l'état réduit, est ensuite transférée, dans une solution de concentration connue de l'espèce à capturer, ici la NMP, à raison de 0,1 mole/dm³ dissous dans l'acétonitrile, pendant un temps déterminé, ici de 1 heure et 30 minutes, sous agitation et sous atmosphère inerte d'argon ou d'azote. Ensuite l'électrode est laissée au potentiel d'abandon, c'est-à-dire qu'aucun potentiel ne lui est appliqué.

Après capture de l'espèce chimique par le film de polypyrrole dopé, on effectue un rinçage de ce film dans une solution dans laquelle l'espèce capturée est insoluble ou très peu soluble et présentant une force ionique élevée afin d'empêcher la décomplexation de l'espèce capturée par le sel de β-cyclodextrine sulfonée.

Pour la NMP, on utilise des solutions aqueuses de perchlorate de lithium à une concentration de 0,5mol/dm³.

Cette solution de rinçage a pour but d'enlever les espèces adsorbées à la surface du film sur l'électrode. Le rinçage est effectué pendant un temps déterminé, de l'ordre de 45 minutes également sous agitation et atmosphère inerte dans le cas présent.

La caractérisation électrochimique du film de polypyrrole dopé ayant capté la NMP a été effectuée par voltampérométrie cyclique à l'aide du dispositif de la figure 1. La figure 3 correspond à cette caractérisation volt-ampérométrie.

Les courbes I à VII de la figure 3 ont été établies au cours de 7 cycles avec une vitesse de balayage en potentiel de 20mV/s dans une solution aqueuse de perchlorate de lithium à 0,5 mol/l. Ces courbes 3 montrent en particulier le processus de relarguage de la NMP vers la solution électrolytique au cours du cyclage. Sur ces courbes, PPy désigne le polypyrrole dopé.

La réalisation du film de polypyrrole dopé 20 comme matière active d'électrode 6 de capteur et/ou de relarguage d'une substance active, décrite précédemment, partait d'une solution aqueuse de β-cyclodextrine sulfonée.

Dans les exemples qui suivent, on décrit la fabrication de quelques dérivés sulfonés utilisables dans l'invention.

### EXEMPLE PRELIMINAIRE : Préparation de la solution de transfert de phase.

44,2g (soit 0,1mol/l) de chlorure de méthyltrioctylammonium sont dissous dans 500ml d'eau et traités par 60g de résine basique du type Dowex^{R} SBR OH⁻, pendant 0,25 h. La résine est alors enlevée par filtration, soigneusement rincée avec de l'eau distillée. Les filtrats réunis sont neutralisés par une solution d'acide sulfurique (2N). Cette neutralisation est suivie par potentiométrie. Le volume de l'émulsion obtenue est complété à 1,51 et son pH ajusté à 6,5 par addition d'une solution de soude (1N). Cette émulsion stable d'agent tensioactif est utilisée directement dans les modes opératoires décrits ci-dessous de préparation de sel de sodium de cyclomalto-oligosaccharide sulfoné.

### EXEMPLE 1: Synthèse du sel de sodium de l'heptakis(6-désoxy-6-sulfonyl)cyclomalto-heptaose.

A 120ml de l'émulsion d'agent tensioactif ci-dessus, sont ajoutés 900mg (7,14mmol) de sulfite de sodium et 900mg (3,31 méquiv.) d'heptakis (6-désoxy-6-iodo) cyclomalto-heptaose préparés selon le mode opératoire décrit par A. Gadelle et J. Defaye dans le document (9) Angew. Chem. Int. Ed. Engl. 30, 78-80 (1991), "Selective halogenation at primary positions of cyclomalto-oligosaccharides and a synthesis of per-3,6-anhydro-cyclomalto-oligosaccharides".

Le mélange est porté à 100°C pendant 24 h. Après refroidissement, le mélange réactionnel est extrait par du dichlorométhane en deux passages de 100ml chacun. La fraction organique est amenée à sec (soit 4,2g) ; elle contient outre le tensioactif, l'heptakis (6-désoxy-6-sulfonyl) cyclomalto-heptaose.

Ce résidu organique est additionné de 1ml de DMSO et d'un mélange organique contenant 250ml de méthanol, 150ml d'acétone et 1ml de solution aqueuse de soude 4N. La solution trouble obtenue est alors centrifugée à 5000 t/min pendant 20 min. Les culots récupérés sont dissous dans de l'eau distillée et la solution filtrée est lyophilisée.

Un spectre RMN du ¹³C montre la présence du seul sel de sodium de l'heptakis(6-désoxy-6-sulfonyl) cyclomalto-heptaose. On en obtient 700mg, ce qui correspond à un rendement de 85% par rapport à l'halogénure de départ.

### EXEMPLE 2: Synthèse du sel de sodium de l'hexakis(6-désoxy-6-sulfonyl)cyclomalto-hexaose.

A 120ml de l'émulsion ci-dessus d'agent tensioactif, sont ajoutés 900mg (7,14mmol) de sulfite de sodium et 900mg (3,31 méquiv.) d'hexakis (6-désoxy-6-iodo) cyclomalto-hexaose, préparé comme dans le document (8). Le mélange est porté à 100°C pendant 24 h. Après refroidissement, le mélange réactionnel est extrait par du dichlorométhane en deux passages de 100ml chacun. La fraction organique est amenée à sec (soit 4,2g) ; elle contient outre le tensioactif, l'hexakis (6-désoxy-6-sulfonyl) cyclomalto-hexaose.

Le résidu organique obtenu est alors traité comme dans l'exemple 1.

Un spectre RMN du ¹³C montre la présence du seul sel de sodium de l'hexakis (6-désoxy-6-sulfonyl) cyclomalto-hexaose. On en obtient 653mg, ce qui correspond à un rendement de 80% par rapport à l'halogénure de départ.

### EXEMPLE 3 : Synthèse du sel de sodium de l'heptakis (6-sulfonyl) cyclomalto-heptaose.

Les 900mg d'heptakis (6-désoxy-6-iodo) cyclomalto-heptaose de l'exemple 3 sont remplacés par 750mg d'heptakis (6-bromo-6-désoxy) cyclomalto-heptaose.

Le produit obtenu possède les mêmes caractéristiques physiques que celui obtenu à partir du dérivé iodé correspondant de l'exemple 1.

## Revendications

1. Polymère conducteur électronique dopé par un dopant, caractérisé en ce que le dopant est une cyclodextrine comportant au moins un groupement sulfonate.

2. Polymère selon la revendication 1, caractérisé en ce que le dopant présente la formule (I) suivante : 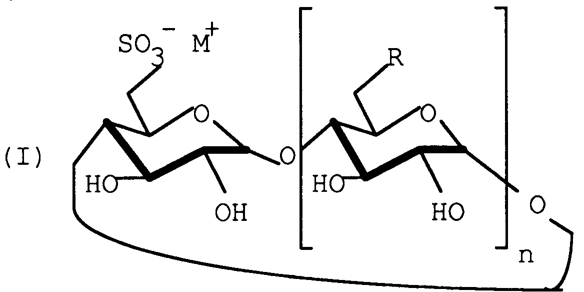 dans laquelle n est un entier allant de 2 à 50, M⁺ est un ion choisi parmi Na⁺, Li⁺, K⁺, NH₄⁺ et Mg _{1/2}⁺, et R représente -SO₃⁻M⁺ ou -OH, R pouvant être différent d'un cycle à l'autre.

3. Polymère selon la revendication 2, caractérisé en ce que M⁺ est Na⁺.

4. Polymère selon la revendication 2, caractérisé en ce que n vaut de 2 à 10.

5. Polymère selon la revendication 2, caractérisé en ce que n est égal à 5, 6 ou 7.

6. Polymère selon la revendication 2, caractérisé en ce que R=-SO₃⁻Na⁺ pour tous les cycles et n vaut 5 ou 6.

7. Polymère selon l'une quelconque des revendications 1 à 6, caractérisé en ce que le polymère est un homopolymère ou copolymère d'un monomère choisi parmi le pyrrole, le thiophène, le bithiophène, l'aniline, la para(aminodiphénylamine) et leurs dérivés.

8. Polymère selon l'une quelconque des revendications précédentes, caractérisé en ce que le polymère est un polypyrrole.

9. Polymère selon l'une quelconque des revendications précédentes, caractérisé en ce qu'il est obtenu par oxydation électrochimique d'un monomère polymérisable dans un milieu liquide contenant la cyclodextrine.

10. Polymère selon l'une quelconque des revendications précédentes, caractérisé en ce que le dopant renferme une substance active.

11. Dispositif pour capter une substance active, caractérisé en ce qu'il comprend un polymère conducteur dopé conforme à l'une quelconque des revendications 1 à 9, constituant une matière active d'électrode et des moyens pour commander la capture de cette substance par ledit polymère.

12. Dispositif pour délivrer une substance active, caractérisé en ce qu'il comprend un polymère conducteur dopé conforme à l'une quelconque des revendications 1 à 9, constituant une matière active d'électrode et renfermant ladite substance active et des moyens pour commander la délivrance de cette substance.
